# EUROPEAN PATENT APPLICATION

(11) **EP 4 733 961 A1**
(43) Date of publication of application: **29.04.2026**
(21) Application number: 24209272.4
(22) Date of filing: 28.10.2024
(51) Int. Cl.: G06F 18/2433, G06V 20/56, E05F 15/73, G06V 20/52, G06V 10/82, G06N 3/044, G06N 3/08

(54) **METHOD FOR IMPROVING AN OPENING OF A FLAP OF A VEHICLE, APPARATUS, VEHICLE AND COMPUTER PROGRAM**

(71) Applicant: Bayerische Motoren Werke Aktiengesellschaft, 80809 München (DE)
(72) Inventor: Heidmann, Fanny, 80796 München (DE); Guimera Cuevas, Felip, 85221 Dachau (DE)

(57) **Abstract**

Embodiments relate to a method 100 for improving an opening of a flap of a vehicle. The method comprises obtaining a movement profile indicative of a trajectory of a user relative to the vehicle and estimating, by a trained machine-learning model and based on the movement profile, whether the flap is to be opened. The trained machine-learning model is configured to generate an embedding based on the movement profile. If it is estimated by the trained machine-learning model that the flap is to be opened, it is determined whether the embedding comprises an outlier. If it is determined that the embedding does not comprise an outlier, the opening of the flap is triggered.

## Description

The present disclosure relates to the field of intent estimation based on machine-learning (ML) techniques. Embodiments relate to a method for improving an opening of a flap of a vehicle, an apparatus, a vehicle and a computer program.

Conventional ML techniques for estimating a user's intent to open a vehicle flap, such as a charging port or a trunk tailgate, may lack robustness in accurately interpreting user behavior. In such systems, the user's trajectories may be tracked and provided as inputs to a trained machine learning model. However, estimation errors can occur due to complex or unexpected trajectories that were not encountered during the model's training phase. This can lead to false positives, where the flap is opened without the user's actual intent.

Thus, there may be a demand for an improved automatic opening of a vehicle's flap. This demand is satisfied by the independent claims of the present application.

A finding of the present application is that an additional outlier detection applied to the latent space of the ML model improves the robustness such that false positives are reduced or avoided.

A method is provided for improving an opening of a flap of a vehicle. The method comprises obtaining a movement profile indicative of a trajectory of a user relative to the vehicle and estimating, by a trained machine-learning model and based on the movement profile, whether the flap is to be opened. The trained machine-learning model is configured to generate an embedding based on the movement profile. The method further comprises, if it is estimated by the trained machine-learning model that the flap is to be opened, determining whether the embedding comprises an outlier and, if it is determined that the embedding does not comprise an outlier, triggering the opening of the flap. Accordingly, an additional verification of the ML result may be performed using outlier detection. This allows ML estimations that lack a sufficient training basis to be discarded, filtered out, or otherwise managed. A higher accuracy in estimating the user's intent may thus be achieved, and false positives may be reduced or avoided.

Outlier detection in the latent space may offer several advantages: The latent space may be capable of filtering out noise and irrelevant variations present in the input data, leading to more accurate analysis. It may enhance the most relevant features, making outliers easier to distinguish, while also reducing the complexity of the data, thereby improving both the efficiency and accuracy of outlier detection. Additionally, the latent space can represent semantic meanings, such as user intent, allowing inputs that differ significantly at the surface level to be recognized as semantically equivalent. By performing anomaly detection within the latent space, it may become possible to more accurately identify unusual patterns in vehicle trajectories, as the latent space filters out irrelevant noise and highlights the core intent. The key advantage may therefore lie in the latent space's ability to provide a refined and meaningful representation of the data, which may facilitate the detection of anomalies.

In some examples, the method further comprises, if it is determined that the embedding comprises an outlier, determining that the flap is not to be opened and updating the trained machine-learning model. For safety reasons, the opening or unlocking of the flap may be suppressed if the ML result is determined to be potentially incorrect. This information can also be utilized for adaptive or continual learning to improve the performance of the ML model over time.

Outliers may be addressed by obtaining additional information, of the same type or a different kind, to verify the machine learning result. This can be implemented by requesting further movement data, incorporating additional computer vision-based estimations, or seeking user confirmation. For example, the method may further comprise, if it is determined that the embedding comprises an outlier, obtaining a further movement profile indicative of a subsequent trajectory of the user relative to the vehicle, estimating, by the trained machine-learning model and based on the further movement profile, whether the flap is to be opened and, if it is estimated, by the trained machine-learning model and based on the further movement profile, that the flap is to be opened, ultimately determining that the flap is to be opened. Additionally or alternatively, the method may comprise, if it is determined that the embedding comprises an outlier, triggering a further estimation of whether the flap is to be opened, wherein the further estimation is generated using computer vision. The method may also comprise, if it is determined that the embedding comprises an outlier, requesting a confirmation whether the flap is to be opened from a user device.

The movement profile may, in some examples, further indicate a speed of a movement of the user along the trajectory. The trained machine-learning model may be configured to estimate whether the flap is to be opened based on the trajectory and the speed. An advantage of incorporating the user's movement speed along the trajectory in the ML model is that it may enhance the accuracy of intent estimation. By considering both the trajectory and the speed, the method may gain a more comprehensive understanding of the user's behavior, allowing it to better distinguish between intentional and unintentional actions. This additional data may help reduce false positives and improve the overall robustness, especially in scenarios where similar trajectories may result in different intents based on speed.

In some examples, the trained machine-learning model may comprise a long short-term memory (LSTM). LSTMs are particularly effective at handling sequential data, which may be useful for understanding patterns over time, such as user movements or behavior. This is because LSTMs can remember important information from earlier steps in a sequence, while also forgetting irrelevant details, allowing for more accurate predictions. Another advantage may be that LSTMs can manage varying time intervals between inputs, making them robust when interpreting trajectories where the timing of events may be inconsistent.

To increase the efficiency and robustness of the method, in some examples, estimating whether the flap is to be opened is executed in response to determining proximity of the user to the flap. This approach may help prevent constant or unintended activation of the ML model, thereby improving overall system performance.

An apparatus is provided comprising processing circuitry configured to perform the above method.

A vehicle is provided comprising the above apparatus.

A computer program is provided having a program code for performing the above method, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method for improving an opening of a flap of a vehicle;
Fig. 2 shows a conventional method used for interpreting trajectories;
Fig. 3 shows an example of the above method applied to a trajectory of Fig. 2;
Fig. 4 shows examples of trajectories which could be wrongly interpreted with a conventional method; and
Fig. 5 shows an example of an apparatus implemented into a vehicle.

In the following, a detailed description of the above figures is provided.

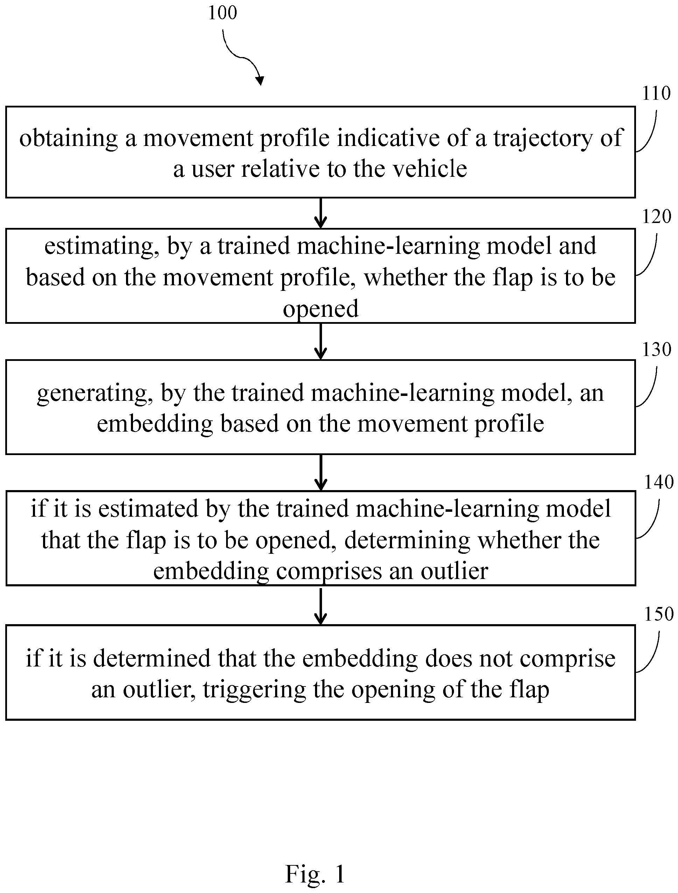

Fig. 1 shows a flowchart of an example of a method 100 for improving an opening of a flap of a vehicle. The method 100 may be computer-implemented. "Opening the flap" may be understood as unlocking the flap, e.g., for enabling a manual opening of the hinge of the flap, and/or automatic movement of the hinge of the flap. The flap may be a charging port or a trunk tailgate, for instance. An example application of the method 100 may be intent classification of trajectories for identifying charging intents.

The method 100 comprises obtaining 110 a movement profile indicative of a trajectory of a user relative to the vehicle. The movement profile may be a quantitative representation of a user's motion characteristics as they approach or interact with a vehicle. It may encompass various parameters that describe the user's trajectory, including position, orientation, and timing information. The movement profile may provide information about the user's continuous path relative to the vehicle, indicating how the user's movement is influenced by their intentions and environmental conditions. This trajectory may be measured, e.g., concerning fixed reference points on the vehicle, such as its location and orientation, allowing for a better understanding of the user's interactions within the vehicle's operational environment.

The trajectory may be measured by a tracking system, e.g., based on a signal from the user's mobile phone, smartwatch or alike, or based on an optical system like a camera tracking the movement of the user.

Obtaining 110 the movement profile may comprise receiving the movement profile from an external tracking system and/or determining the movement profile in case the tracking system is integrated into the apparatus executing the method 100.

In some examples, the trained machine-learning model may comprise a long short-term memory (LSTM). LSTMs are particularly effective at handling sequential data, which makes them suitable for tasks like time series prediction, natural language processing, and speech recognition.

The method 100 further comprises estimating 120, by a trained machine-learning model and based on the movement profile, whether the flap is to be opened. The input to the ML model may be the movement profile or data derived thereof (e.g., upstream methods may be applied to the movement profile for, e.g., smoothing, filtering, pre-processing the movement profile which lead to derived data which can then be input to the ML model). The output to the ML model may be any indication, e.g., a flag or a confidence interval, whether the flap is to be opened.

The trained ML model may be a data structure and/or set of rules representing a statistical model that is used to perform the task of identifying whether the flap is to be opened, i.e., identifying an intent of the user to open the flap, without using explicit instructions, instead relying on models and inference. The data structure and/or set of rules represents learned knowledge (e.g. based on training performed by a machine-learning algorithm). For example, in machine-learning, instead of a rule-based transformation of data, a transformation of data may be used, that is inferred from an analysis of historical and/or training data. In the proposed technique, the content of the movement profile is analyzed concerning the underlying interpretation of the intent of the user using the machine-learning model.

The machine-learning model is trained by a machine-learning algorithm. The term "machine-learning algorithm" denotes a set of instructions that are used to create, train or use a machine-learning model. For the machine-learning model to analyze the movement profile the machine-learning model may be trained using training and/or historical movement profiles as input and training content information (e.g., labels indicating whether the flap is to be opened for each of the training or historical movement profiles) as output. By training the machine-learning model with a large set of training data and associated training content information (e.g. labels or annotations), the machine-learning model "learns" to recognize the content of the movement profiles, so the content that are not included in the training data can be recognized using the machine-learning model. By training the machine-learning model using training data and a desired output, the machine-learning model "learns" a transformation between the data and the output, which can be used to provide an output based on non-training data provided to the machine-learning model.

The machine-learning model may be trained using training input data (e.g. training movement profiles). For example, the machine-learning model may be trained using supervised learning, semi-supervised learning, unsupervised learning, or reinforcement learning. Furthermore, additional techniques may be applied to some of the machine-learning algorithms. For example, feature learning may be used. In some examples, the machine-learning algorithm may use a decision tree, association rules or alike as a predictive model.

For example, the machine-learning model may be an Artificial Neural Network (ANN). ANNs comprise a plurality of interconnected nodes and a plurality of connections, so-called edges, between the nodes. There are usually three types of nodes, input nodes that receive input values (the movement profile or data derived thereof), hidden nodes that are (only) connected to other nodes, and output nodes that provide output values (an indication whether the flap is to be opened). Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input. Alternatively, the machine-learning model may be a support vector machine, a random forest model, a gradient boosting model, a Bayesian network, a genetic algorithm, or alike.

In some examples, the trained machine-learning model may comprise a long short-term memory (LSTM). LSTMs are particularly effective at handling sequential data, which may be useful for understanding patterns over time, such as user movements or behavior. This is because LSTMs can remember important information from earlier steps in a sequence, while also forgetting irrelevant details, allowing for more accurate predictions. Another advantage may be that LSTMs can manage varying time intervals between inputs, making them robust when interpreting trajectories where the timing of events may be inconsistent.

Optionally, the movement profile may also indicate a speed of a movement of the user along the trajectory. The trained machine-learning model may be configured to estimate whether the flap is to be opened based on the trajectory and the speed. In such cases, the speed may be part of the training, too, i.e., the training data may include trajectories and associated speed. An advantage of incorporating the user's movement speed along the trajectory in the ML model is that it may enhance the accuracy of intent estimation. By considering both the trajectory and the speed, the method may gain a more comprehensive understanding of the user's behavior, allowing it to better distinguish between intentional and unintentional actions. This additional data may help reduce false positives and improve the overall robustness, especially in scenarios where similar trajectories may result in different intents based on speed.

The method 100 further comprises generating 130, by the trained machine-learning model, an embedding based on the movement profile. The embedding may be an interim result of the estimation in a hidden node or a latent space of the ML model. Generating 130 the embedding may refer to the process in which the ML model analyzes the user's motion characteristics, as represented by the movement profile, to produce a compact, high-dimensional vector representation known as an embedding. This embedding may capture essential features and patterns of the movement profile, effectively condensing the trajectory information into a form that facilitates further analysis or decision-making. The trained machine-learning model may apply its learned parameters and structures to transform the raw data of the movement profile or data derived thereof into this embedding, which can then be utilized for user intent prediction. The generated embedding may thereby serve as a meaningful representation of the user's trajectory relative to the vehicle, enabling improved understanding and response to user actions.

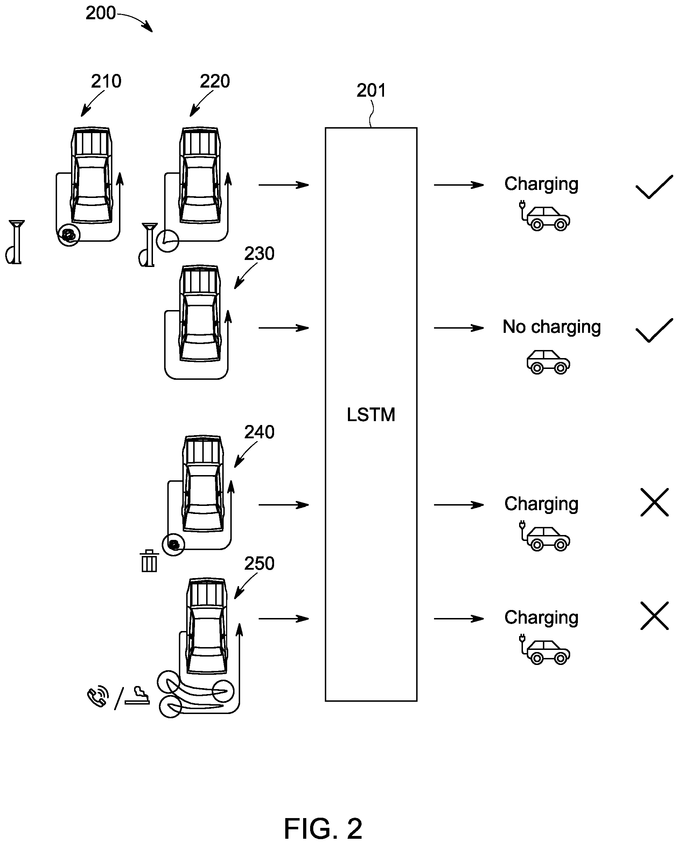

Conventional methods may fail at preventing false positives in some scenarios, as illustrated by Fig. 2. Fig. 2 shows a flowchart of a conventional method 200 for interpreting movement profiles by an LSTM 201. In a first scenario 210 and a second scenario 220, a trajectory leads from the driver's door to a charging station and then around the car. In the first scenario 210, the trajectory exhibits a short stay with noisy movements near the charging station. In the second scenario 220, the trajectory exhibits a bend towards the charging station. In both scenarios 210, 220, the LSTM 201 may correctly predict that the user has a charging intent. For instance, the LSTM 201 may detect stops or direction changes likely to be at a charging terminal and derive a user's intent thereof. Conventionally, accuracies of 90 to 95% on common use cases with coherent behavior may be reached.

In a third scenario 230, a trajectory leads from the driver's door to the other side of the car via the backside. However, the trajectory does not include any deviations from a straight way around the car. In this scenario 230, the LSTM 201 may also correctly predict that the user has no charging intent.

In a fourth scenario 240, a trajectory resembles strongly the trajectory of the first scenario 210. However, the user actually approaches a waste basket and not a charging terminal. In a fifth scenario 250, a trajectory exhibits fluctuations from one side to another resulting from the user smoking or talking on the phone while slowly going back and forth. The conventional LSTM 201 may misinterpret the fourth scenario 240 and the fifth scenario 250 as a charging intent and falsely open the charging flap. In contrast to using the conventional LSTM 201, the method 100 may prevent false positives especially in the fifth scenario 250, i.e., when complex or unusual trajectories are faced.

Referring back to Fig. 1, the method 100 comprises, if it is estimated by the trained machine-learning model that the flap is to be opened, determining 140 whether the embedding comprises an outlier. Thus, anomaly detection (i.e., outlier detection) is used, which may be aimed at providing an identification of latent values that raise suspicions by differing significantly from the majority of latent values during training. In other words, outlier detection may be a technique to identify unusual data points that differ from the majority of data, e.g., with a predefined distance. Applying outlier detection to the latent space (thus, to the embedding) may refer to the identification of anomalies within a transformed representation of the input data, rather than to the original input space. The latent space is a lower-dimensional space where data points are mapped by an algorithm, e.g., an autoencoder. This latent space captures the underlying patterns and structures of the data, often in a more compact and meaningful way.

Detecting outliers in the latent space may be looking for unusual patterns after simplifying and cleaning up the input data, rather than trying to find them amidst all the possible noise and complexity of the original input data. Anomaly detection in the latent space may be more effective than in the input space because the latent space typically represents the data in a more compact and meaningful way. This abstraction may help in capturing the essential features and patterns, making it easier to distinguish normal from anomalous data.

As an example, the input space may be provided as trajectories represented as raw GPS coordinates over time. Direct anomaly detection on GPS data may struggle with noise and variations in driving patterns. Instead, trajectories may be encoded into a latent space using a neural network (e.g., an autoencoder, trajectory-based variational autoencoder, etc.). The latent space may capture the underlying intent (charging vs. not charging) more abstractly and robustly. A possible scenario may be that a trajectory involves a detour to a charging station. In the input space, slight deviations in the GPS coordinates may be misinterpreted as anomalies due to noise. In the latent space, however, a detour may be semantically recognized as a normal pattern associated with the charging intent, reducing false positives. By performing anomaly detection in the latent space, unusual patterns in the trajectories may be more accurately identified, as the latent space, e.g., filters out irrelevant noise and highlights the core intent.

The method 100 further comprises, if it is determined that the embedding does not comprise an outlier, triggering 150 the opening of the flap. That is, absence of outliers may be interpreted as scenarios in which the ML model performs well. The original estimation of the ML model would therefore be taken as the final result.

Triggering 150 the opening of the flap may comprise sending a trigger signal to a control system of the flap or, in case the control system is part of the apparatus executing the method 100, controlling the flap to open. In the former case, the method 100 may depend on a communicative coupling to the control system in order to transfer the trigger signal.

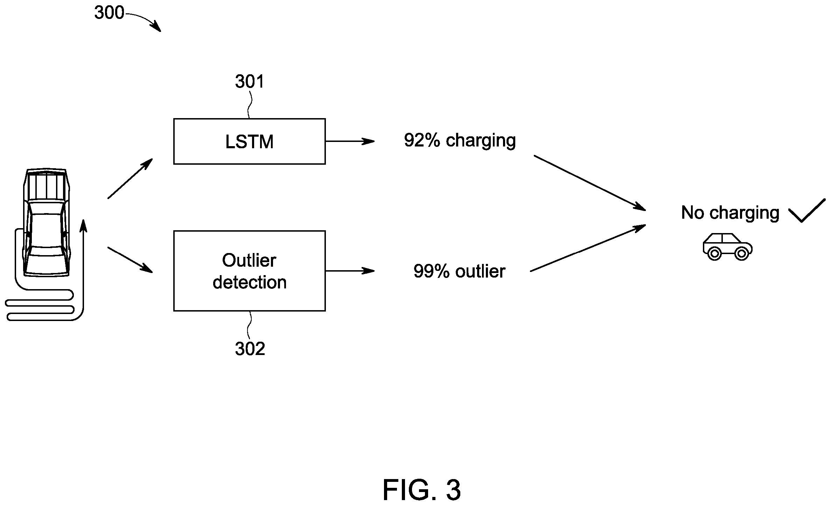

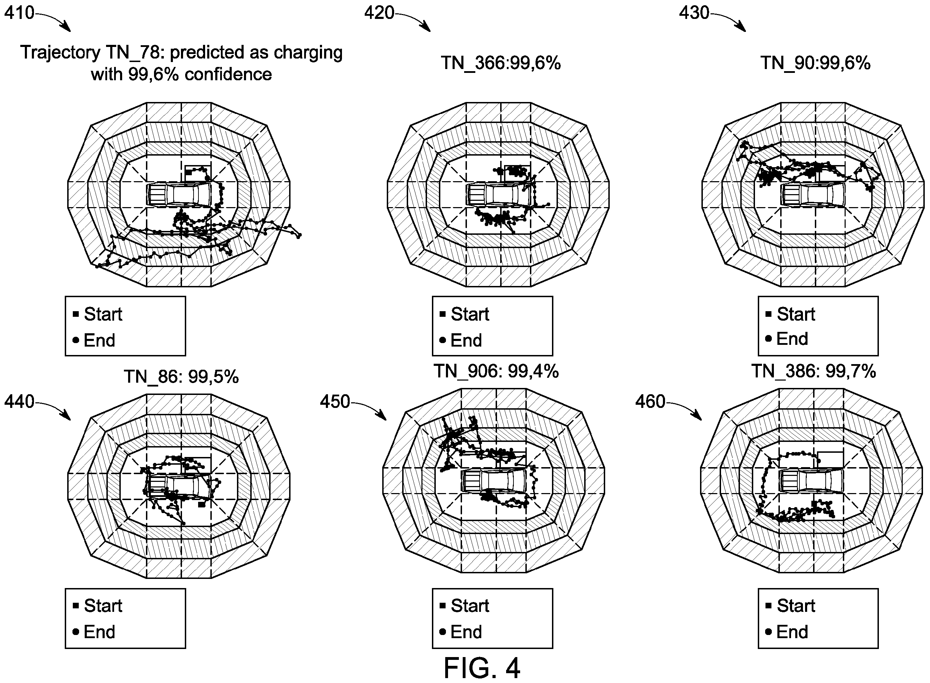

On the other hand, e.g., for safety reasons, the opening or unlocking of the flap may be suppressed if the ML result is determined to be potentially incorrect - thus, in cases where an outlier is present. As illustrated by the flowchart 300 of Fig. 3, a concrete implementation of the method 100 may implement an LSTM 301 which is to interpret the scenario 250 of Fig. 2. The LSTM 301 may output a confidentiality of 92% that the user intends to charge the vehicle. However, an outlier detection 302 may output a confidentiality of 99% that an outlier is present. In such a case, it may be determined that the flap is not to be opened. Fig. 4 illustrates further examples of trajectories 410, 420, 430, 440, 450, 460 which could be wrongly interpreted with a conventional approach but could be correctly interpreted using the method 100. The trajectories 410, 420, 430, 440, 450, 460 are recorded between a start and an end point and are illustrated as a connection between discrete measurement points. The trajectories 410, 420, 430, 440, 450, 460 are all more complex paths with overlapping windings, crossings or sweeping paths.

The outlier information can also be utilized for adaptive or continual learning to improve the performance of the ML model over time. For instance, the method 100 may further comprise, if it is determined that the embedding comprises an outlier, determining that the flap is not to be opened and updating the trained machine-learning model. Thus, the outlier information may be used to revise the charging confidence which is output by the ML model (e.g., a classifier), to improve model confidence and prevent false predictions.

For updating the ML model, if the outlier detection reveals that the ML model is encountering unexpected or semantically different inputs, there may be several potential adjustments. These adjustments may aim to help the model better handle these novel patterns or anomalies in the movement profile. One approach may be to augment your training data with examples that include the new input (the movement profile). By incorporating a broader range of examples into the training set, the ML model may learn to generalize better and handle diverse sequences. Additionally or alternatively, an update or adjustment might involve fine-tuning the model. This may involve retraining the ML model with a revised dataset that includes both the original and new input or adjusting the model's hyperparameters to improve its learning capacity and robustness. In some cases, the update may involve modifying the model architecture itself. This could include adding layers, changing the number of units in existing layers, or changing the types of recurrent layers to better capture the nuances of the new data. Regularization techniques may be applied to address overfitting or to help the model generalize better across different types of sequences. Techniques like dropout, weight decay, or incorporating more robust loss functions can make the model more resilient to variations in the input.

Additionally or alternatively, outliers may be addressed by obtaining additional information, of the same type or a different kind, to verify the machine learning result. This can be implemented by requesting further movement data, incorporating additional computer vision-based estimations, or seeking user confirmation. For example, the method 100 may further comprise, if it is determined that the embedding comprises an outlier, obtaining a further movement profile indicative of a subsequent trajectory of the user relative to the vehicle, estimating, by the trained machine-learning model and based on the further movement profile, whether the flap is to be opened and, if it is estimated, by the trained machine-learning model and based on the further movement profile, that the flap is to be opened, ultimately determining that the flap is to be opened. For instance, the method 100 may include waiting a couple of seconds to collect more localization point and check if the user stays localized in the charging flap area.

Another example for obtaining additional information may be that the method 100 comprises, if it is determined that the embedding comprises an outlier, triggering a further estimation of whether the flap is to be opened, wherein the further estimation is generated using computer vision. This is applicable for the case that the measurement of the movement profile is signal-based, e.g., GPS-based. On the other hand, if the movement profile is camera-based, the further estimation may be generated using a localization signal. The further estimation may increase the confidentiality of the result of the ML model. Furthermore, computer vision may be used to detect presence of a charging station or other environmental triggers for opening the flap, for instance.

The method 100 may additionally or alternatively comprise, if it is determined that the embedding comprises an outlier, requesting a confirmation whether the flap is to be opened from a user device. Thus, the method 100 may include requesting a confirmation from the user such as a notification on their smart watch "do you want to charge?". Only if the confirmation is given from the user device, the flap may be opened.

To increase the efficiency and robustness of the method 100, in some examples, estimating 120 whether the flap is to be opened is executed in response to determining proximity of the user to the flap. This approach may help prevent constant or unintended activation of the ML model, thereby improving overall system performance.

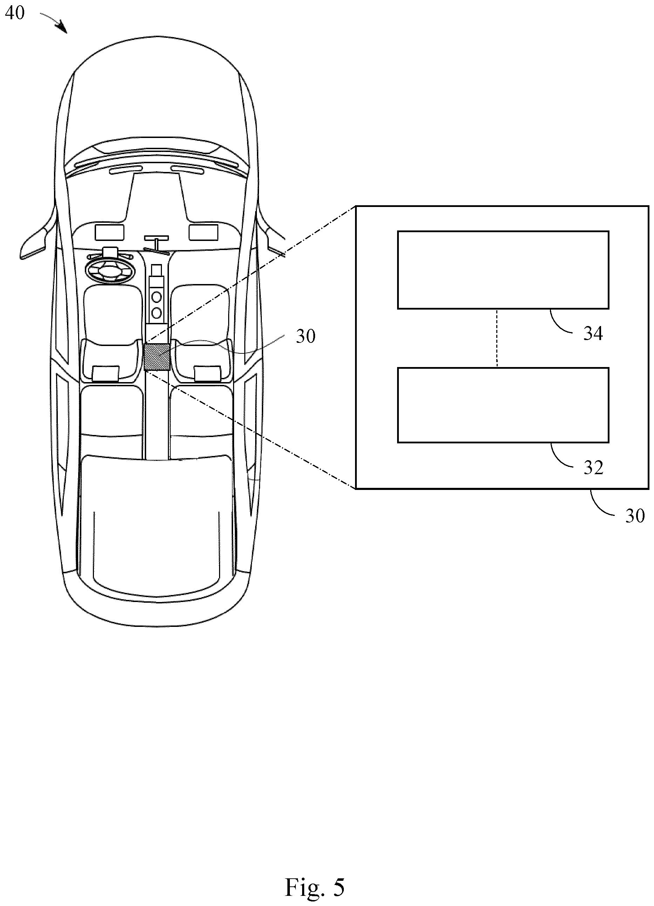

Fig. 5 illustrates a block diagram of an example of an apparatus 30, e.g., for a vehicle 40. The apparatus 30 comprises interface circuitry 32 configured to communicate with at least one of a communication device, user equipment or backend, and processing circuitry 34 configured to perform a method as described above, e.g., the method 100 as described with reference to Fig. 1. For example, the apparatus 30 may be part of the vehicle 40, e.g., part of a control unit of the vehicle 40.

For example, the vehicle 40 may be a land vehicle, such as a road vehicle, a car, an automobile, an off-road vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 5 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 5 may comprise one or more optional additional features corresponding to one or more aspects mentioned in connection with the proposed concept or one or more examples described above (e.g., Figs. 1 to 4).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
40 vehicle
100 method
110 obtaining a movement profile
120 estimating whether the flap is to be opened
130 generating an embedding
140 determining whether the embedding comprises an outlier
150 triggering the opening of the flap
200 conventional method
210 to 250 scenarios
201 LSTM
300 method
301 LSTM
302 outlier detection
410, 420, 430, 440, 450, 460 trajectories

## Claims

1. A method (100) for improving an opening of a flap of a vehicle, comprising:
obtaining (110) a movement profile indicative of a trajectory of a user relative to the vehicle;
estimating (120), by a trained machine-learning model and based on the movement profile, whether the flap is to be opened, wherein the trained machine-learning model is configured to generate (130) an embedding based on the movement profile;
if it is estimated by the trained machine-learning model that the flap is to be opened, determining (140) whether the embedding comprises an outlier; and
if it is determined that the embedding does not comprise an outlier, triggering (150) the opening of the flap.

2. The method (100) of claim 1, further comprising:
if it is determined that the embedding comprises an outlier, determining that the flap is not to be opened and updating the trained machine-learning model.

3. The method (100) of any one of the previous claims, further comprising:
if it is determined that the embedding comprises an outlier, obtaining a further movement profile indicative of a subsequent trajectory of the user relative to the vehicle;
estimating, by the trained machine-learning model and based on the further movement profile, whether the flap is to be opened; and
if it is estimated, by the trained machine-learning model and based on the further movement profile, that the flap is to be opened, ultimately determining that the flap is to be opened.

4. The method (100) of any one of the previous claims, further comprising, if it is determined that the embedding comprises an outlier, triggering a further estimation of whether the flap is to be opened, wherein the further estimation is generated using computer vision.

5. The method (100) of any one of the previous claims, further comprising, if it is determined that the embedding comprises an outlier, requesting a confirmation whether the flap is to be opened from a user device.

6. The method (100) of any one of the previous claims, wherein the movement profile further indicates a speed of a movement of the user along the trajectory, and wherein the trained machine-learning model is configured to estimate whether the flap is to be opened based on the trajectory and the speed.

7. The method (100) of any one of the previous claims, wherein the trained machine-learning model comprises a long short-term memory, LSTM.

8. The method (100) of any one of the previous claims, wherein estimating (120) whether the flap is to be opened is executed in response to determining proximity of the user to the flap.

9. An apparatus (30), comprising processing circuitry (32) configured to perform the method according to any of the previous claims.

10. A vehicle (40) comprising the apparatus according to claim 9.

11. A computer program having a program code for performing the method according to any one of claims 1 to 8, when the computer program is executed on a computer, a processor, or a programmable hardware component.
